# EUROPÄISCHE PATENTSCHRIFT

(11) **EP 0 836 065 B1**
(45) Veröffentlichungstag und Bekanntmachung des Hinweises auf die Patenterteilung: **21.11.2001**
(21) Anmeldenummer: 97810757.1
(22) Anmeldetag: 09.10.1997
(51) Int. Cl.: F25D 29/00

(54) **Verfahren zum Betrieb eines Haushalts-Kühlschrankes**
Method of operating a domestic refrigerator
Procédé de fonctionnement d'un réfrigérateur ménager

(30) Priorität: 14.10.1996 CH 250396
(43) Veröffentlichungstag der Anmeldung: 15.04.1998
(73) Patentinhaber: HERMANN FORSTER AG, CH-9320 Arbon (CH)
(72) Erfinder: Schwitzgebel, Fernand, 9320 Stachen (CH); Pelzer, Rafael, 78462 Konstanz (DE)
(74) Vertreter: Bosshard, Ernst

(56) Entgegenhaltungen:
- EP-A- 0 099 417
- EP-A- 0 690 277
- EP-A- 0 707 183
- EP-A- 0 727 628
- DE-B- 1 012 314
- GB-A- 2 180 962
- GB-A- 2 254 452
- US-A- 4 697 429
- US-A- 4 858 443
- US-A- 4 936 105
- US-A- 5 355 686
- US-A- 5 524 444

## Beschreibung

Bei Haushalts-Kühl- und Gefriergeräten ist die Verwendung von elektromechanischen Kapillarrohrthermostaten zur Steuerung der Kühlraumtemperatur Stand der Technik.

Bei diesen Thermostaten kann entlang des Drehwinkels der Verstellachse eine fest vorgegebene Ein- und Ausschalttemperatur gewählt werden. Die Einschalttemperatur bleibt hierbei im Regelfalle konstant leicht oberhalb Null Grad - sie verläuft also linear - um eine selbsttätige Abtauung des Kühlraumverdampfers in der Verdichterstillstandsphase zu gewährleisten. Die Kennlinie der Ausschalttemperatur ist im allgemeinen linear und durch physikalische Gegebenheiten in ihrer Steilheit begrenzt. Bei grosser Belastung des Kühl- oder Gefrierraumes kann die Kühlraumtemperatur nur begrenzt reguliert werden, da die Gefahr besteht, dass der eingestellte Ausschaltwert nicht mehr erreicht werden kann und der Verdichter in Dauerbetrieb übergeht.

Bekannt ist, dass bei neueren Kühl- und Gefriergeräten auch elektronische Temperaturregler zur Anwendung gelangen, die jedoch lediglich die Steuerungsfunktion des Kapillarrohrreglers übernehmen und mit je einer starren linearen Ein- und Ausschaltkurve arbeiten. Bei neueren, energieverbrauchsoptimierten Kühl- und Gefriergeräten mit verstärkter Isolation führt eine solche Temperaturreglung zu qualitativ schlechtem, trägen Abtauverhalten mit daraus resultierenden unerwünscht grossen Temperaturschwankungen.

In EP-A-0 727 628 ist ein Verfahren und eine Regeleinrichtung zur Temperaturregelung in Kühlgeräten bekannt, wobei die Festlegung der Einschalt- und Ausschaltzeitdauer einer Kältequelle auf der Basis der zuvor ermittelten Bedarfsgrösse erfolgt, um den Energieverbrauch zu reduzieren. Dies erfolgt durch eine Ist-Temperatur-Mittelungseinheit, die mit einer Vergleichs/Differenzbildungseinheit zusammenwirkt, mit der eine Kühlbedarfsmittelungseinheit in Verbindung steht, welche schliesslich die Kältequelle steuert.

Die GB-A-2254452 bezieht sich auf eine Steuereinrichtung für einen Kühlschrank mit einer komplexen elektronischen Schalteinrichtung, wobei eine Mehrzahl von Ein- und Ausschaltwerten in einem Speicher abgespeichert sind, mit Adress-Schaltungen, die eine Auswahl mittels eines Betätigungsgliedes erlauben.

Die US-A-5,355,686 zeigt eine Temperatursteuereinrichtung für ein Kühlgerät mit zwei Kühlkammern, wobei in jeder Kühlkammer ein Temperaturfühler vorhanden ist. Mittels einer Temperatur-Steuereinrichtung wird die Kältequelle nach algorithischen Werten gesteuert in Abhängigkeit der Temperatur in den beiden Kammern.

Aus der DE-B-1 012 314 geht hervor, bei einem Haushaltkühlschrank eine Heizeinrichtung in Form einer Innenbeleuchtung vorzusehen, die bewirkt, dass dem Kühlabteil ständig so viel Wärme zugeführt wird, dass die Kältemaschine zum regelmässigen Einschalten gebracht wird.

Der Erfindung liegt die Aufgabe zugrunde, bei einer elektronischen Temperaturmessung bei unterschiedlichen Belastungszuständen den tatsächlich anfallenden und insbesondere einen erhöhten Kältebedarf zu erkennen und die Ein- bzw. Ausschaltwerte auf einfache Weise bedarfsweise festzulegen.

Diese Aufgabe wird durch die kennzeichnenden Merkmale des Patentanspruches 1 gelöst.

Die Ein- und Ausschaltwerte des Verdichters können von nichtlinearen Kennlinien abgerufen werden. Bei zeitweise erhöhtem Kältebedarf, wenn beispielsweise grössere Mengen Kühlgut mit Raumtemperatur in das Kühlfach eingebracht wird, bewirkt die Steuerelektronik selbsttätig eine Absenkung der Einschalttemperatur. Die ermöglicht im Normalfall eine geringere Laufzeit des Verdichters und Stromeinsparungen, und erlaubt eine Reaktion bei erhöhtem Kältebedarf.

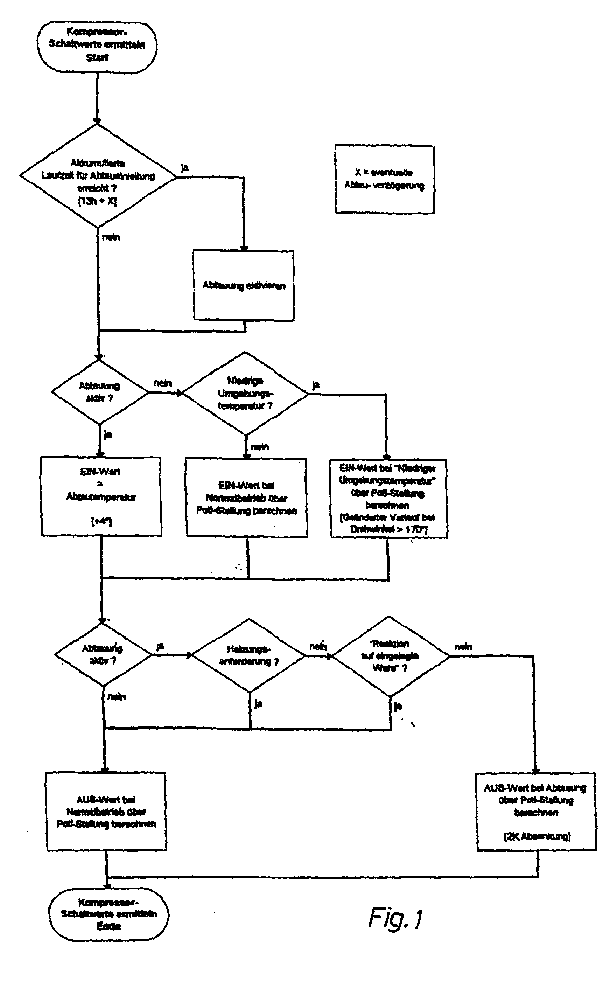

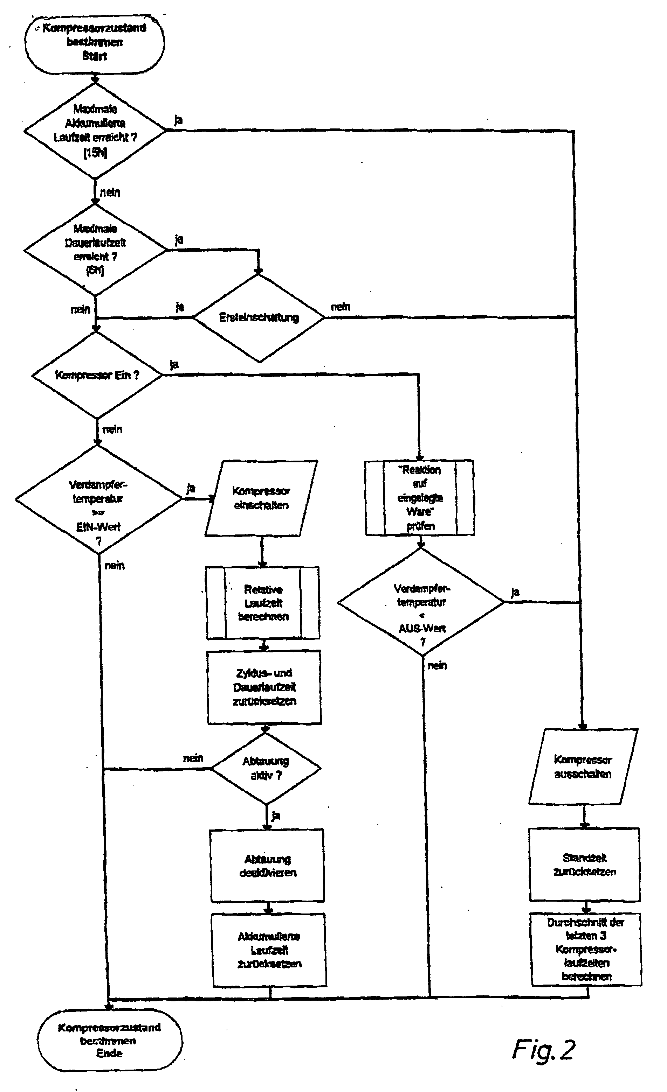

Die Erfindung wird nachfolgend anhand der Fig. 1 - 3 näher erläutert.

Es zeigen:
- Fig. 1: ein erstes Flussdiagramm
- Fig.2: ein zweites Flussdiagramm
- Fig.3: Regelkennlinien der Steuerung

Der Haushalt-Kühlschrank enthält in an sich bekannter Weise einen in einem Kältekreislauf angeordneten Verdichter und einen Verdampfer. Der Kühlraum ist vorzugsweise in mehrere Kälte- oder Gefrierzonen unterteilt.

Die Steuerung des Verdichters - also das Ein- und Ausschalten eines Antriebsmotores - erfolgt temperaturabhängig und z.T. zeitabhängig durch elektronische Schaltmittel.

Die das Ein- und Ausschalten bewirkenden Temperaturwerte sind mehreren, nichtlinearen Kennlinien zugeordnet.

Beim normalen Kühlbetrieb erfolgt das Einschalten des Verdichters bei einer Temperatur knapp unterhalb der Nullgrad-Grenze, um ein Abtauen bereits nach kurzer Laufzeit des Verdichters zu verhindern. Nach Ablauf einer maximalen, kumulierten Laufzeit des Verdichters - beispielsweise nach 13 Stunden - wird er abgeschaltet, sodass die Temperatur im Innern des Kühlraumes auf über Null Grad C ansteigt und dadurch ein Abtauen stattfindet. Die Einschalttemperatur in dieser Abtauphase wird beispielsweise auf etwa 4° C angehoben.

Um einen unerwünschten Dauerlauf zu begrenzen wird die ununterbrochene maximale Laufzeit des Verdichters beschränkt, beispielsweise auf etwa 5 Stunden.

Wenn eine grössere Menge Kühlgut von etwa Raumtemperatur in den Kühlraum, beispielsweise in das Gefrierfach eingelegt wird, steigt die Temperatur in diesem Fach über das während der Kühlphase übliche Mass an. Dieser abnormale Temperaturanstieg wird von der Steuerelektronik als erhöhter Kältebedarf erkannt und in dem Sinne ausgewertet, dass die Steuerelektronik die Einschalttemperatur des Verdichters selbsttätig absenkt, wobei die Ausschalttemperatur ebenfalls nicht linear angepasst wird. Die Ein- und Ausschaltwerte folgen somit nichtlineraren Kennlinien. Ausserdem bewirkt dieser erhöhte Kältebedarf, dass die Steuerelektronik eine bevorstehende Abtauphase zeitlich verschiebt. Nach dem Abtauvorgang wird die Zählung der akkumulierten Verdichterlaufzeit wieder bei Null. Ein Sonderfall besteht dann, wenn die Umgebungstemperatur des Kühlschrankes nur wenig von der Kühlraumtemperatur abweicht, sodass nur ein sehr geringer Kältebedarf im Kühlraum besteht. Dadurch würde der Verdichter bei ungünstigen Umständen während längerer Zeit nicht eingeschaltet, was im Gefrierfach zu einem unerwünschten Temperaturanstieg führt. Um dies zu vermeiden, bewirkt die Steuerelektronik in einem solchen Fall selbsttätig die Einschaltung einer Wärmequelle, wenn das Verhältnis der Verdichterlaufzeit zur Zykluslaufzeit einen vorbestimmten Wert unterschreitet. Vorzugsweise findet eine Heizung - beispielsweise durch eine eingeschaltete Lampe statt. Die benötigte Heizleistung lässt sich durch die Einschaltdauer variieren.

Gegebenenfalls können von der Steuerelektronik noch weitere Parameter berücksichtigt werden, beispielsweise die Türöffnungszahl oder Ausfall von Gliedern der elektronischen Steuerung.

Die elektronischen Glieder der Steuerung sind von an sich bekannter Bauart.

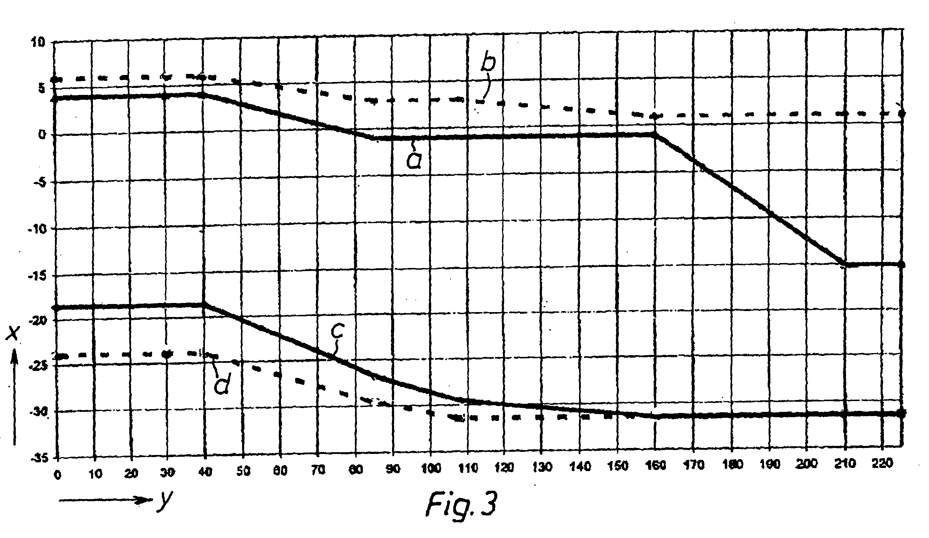

In Fig.3 sind die Regelkennlinien der elektronischen Kühlschrank-Steuerung dargestellt, wobei die Temperatur- und Drehwinkelwerte der einzelnen Kurvenpunkte frei wählbar sind.

Auf der Ordinatenachse y ist der Regler-Drehwinkel aufgetragen und auf der Abzissenachse x ist die Schalttemperatur aufgetragen.
a) zeigt den Verlauf des Einschaltwertes bei Normaltemperatur
b) zeigt den Einschaltwert bei niedriger Umgebungstemperatur
c) zeigt den Ausschaltwert
d) zeigt den Ausschaltwert vor dem Abtauen.

## Patentansprüche

1. Verfahren zum Betrieb eines Haushalt-Kühlschrankes mit einem im Kältekreislauf angeordneten Verdichter und mit einem Verdampfer, wobei die Festlegung der Einschaltung und Ausschaltung des Verdichters abhängig vom tatsächlichen Kältebedarf selbsttätig durch elektronische Schaltglieder erfolgt, **dadurch gekennzeichnet, dass** die Ein- und Ausschaltwerte je durch mindestens eine vorbestimmte nicht-lineare Kennlinie (a,c) bestimmt wird, auf deren Ordinatenachse (y) die Regler-Drehwinkel und auf deren Abzissenachse (x) die Schalttemperaturen aufgetragen sind und bei erhöhtem Kältebedarf die Einschalttemperatur gegenüber den vorhergehenden Schaltperioden der Kühlphase von einer Steuerelektronik selbsttätig abgesenkt wird.

## Claims

1. A method of operating a domestic refrigerator having a compressor arranged within its cooling circuit, and an evaporator, the switching on and off of the compressor being determined automatically by electronic switching elements, depending on the actual cooling requirement, **characterised in that** the switching on and off levels are determined each by at least one predetermined, non-linear characteristic (a, c) the regulator rotation angle being entered on its ordinate axis (y) and the switching temperatures on its abscissa axis (x), the switching on temperature being automatically lowered in relation of the preceding cooling phase switching periods by control electronics when the cooling requirement is increased.

## Revendications

1. Procédé de fonctionnement d'un réfrigérateur ménager comportant un compresseur disposé dans un circuit frigorifique et un évaporateur, dans lequel la détermination de la mise en circuit et de la mise hors circuit du compresseur se fait automatiquement, par des organes de commutation électroniques, en fonction d'un besoin de froid réel, **caractérisé en ce que** les valeurs d'enclenchement et de coupure sont respectivement déterminées par au moins une courbe caractéristique non linéaire prédéterminée (a, c), sur l'axe des ordonnées (y) de laquelle est porté l'angle de rotation du régulateur et sur l'axe des abscisses (x) de laquelle sont portées les températures de commutation, et **en ce que**, en cas de besoin en froid plus élevé, la température de commutation est abaissée automatiquement par un dispositif électronique de commande par rapport aux périodes de commutation précédentes de la phase de refroidissement.
